# EUROPEAN PATENT APPLICATION

(11) **EP 4 451 804 A1**
(43) Date of publication of application: **23.10.2024**
(21) Application number: 23168156.0
(22) Date of filing: 17.04.2023
(51) Int. Cl.: H05B 45/30, H02J 9/06

(54) **DRIVER AND POWER SUPPLY SYSTEM FOR LIGHTING MEANS**

(71) Applicant: Tridonic GmbH & Co. KG, 6851 Dornbirn (AT)
(72) Inventor: Wilson, Ian, 6850 Dornbirn (AT)
(74) Representative: Beder, Jens

(57) **Abstract**

The present invention provides a driver for lighting means The driver comprises a first terminal and a second terminal for receiving electrical energy from outside the driver; a third terminal for electrical connection with the lighting means; a switch unit; a first power supply path comprising a DC-to-DC converter stage and being electrically connected between the first terminal of the driver and a first terminal of the switch unit; a second power supply path comprising an AC-to-DC converter stage and being electrically connected between the second terminal of the driver and a second terminal of the switch unit; and a common power supply path electrically connected between a third terminal of the switch unit and the third terminal of the driver. The switch unit is configured to be controlled to switch between a first state and a second state such that in the first state, the first terminal of the switch unit and the third terminal of the switch unit are electrically connected with each other, and in the second state, the second terminal of the switch unit and the third terminal of the switch unit are electrically connected with each other.

## Description

The present invention relates to a driver and power supply system for lighting means (e.g. at least one light emitting diode), wherein the power supply system comprises the driver. The present invention further relates to a luminaire comprising the driver and a method for operating the driver. The power supply system may be referred to as "electrical power supply system".

Nowadays power supply systems that are included in an area for electrical energy provision to electrical devices of the area (such as lighting means and, thus, drirvers for lighting means) may use a renewable electrical energy source, such as a photovoltaic system (PV system), wind energy system etc., as an electrical energy source. The area may be an indoor-area, such as a building, or an outdoor area, such as a parking lot. Such power supply systems have the advantage that they may not only provide an electrical power supply (i.e. electircla energy) in the area, but they may also feed into mains (e.g. for example when the renewable electrical energy source provides more electrical power during a time period than is needed in the area during the time period).

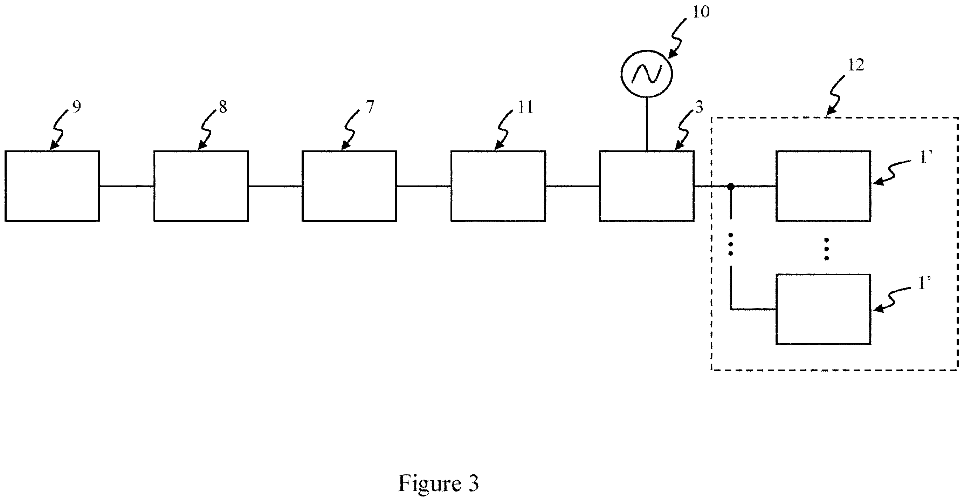

**Figure 3** shows an example of such a usual power supply system comprising a renewable electrical energy source. As shown in Figure 3, a renewable electrical energy source 9 is electrically connected with a charger 8 that is electrically connected with a battery 7. Thus, the charger 8 may charge the battery 7 using electrical energy (DC power) provided by the renewable electrical energy source 9 and the battery 7 is rechargeable. In the following the term "electrically connect" is abbreviated by the term "connect". The electrical energy from the battery 7 may then be forwarded to a lighting system 12 in an area using a central inverter 11 in the area. In the following, it is assumed that the area is a building. This is only by way of example and, thus, the following is respectively valid for any other area. For this the central inverter 11 is connected with the battery 7 for converting the DC power provided by the battery 7 to AC power. A central switch unit 3 is provided in the building for providing AC power (e.g. AC voltage) to the lighting system 12 of the building either from outside the building, such as mains 10, or by the central inverter 11 of the building. As shown in Figure 3, the lighting system 12 may comprise drivers 1' for driving the lighting means of the lighting system 12. The drivers 1' may be part of respective luminaires of the lighting system 12 for driving lighting means of the respective luminaires.

Thus, the drivers 1' may be electrically supplied via the central switch 3 either with AC power from outside the building (e.g. from mains 10) or by the central inverter 11. The number of two drivers 1' shown in Figure 3 is only by way of example and, thus, may be different, e.g. one or greater than two. The central inverter 11 may provide the same AC voltage as mains 10, e.g. an AC voltage of 230 Volts. In case, the drivers 1' are light emitting drivers (LED drivers) for driving LEDs, the AC voltage provided via the central switch unit 3 either from mains 10 or by the central inverter 11, may be converted by each LED driver to an internal DC voltage (e.g. DC bus voltage). Then, the internal DC voltage of the respective LED driver 1' may be further converted for driving the respective one or more LEDs, i.e. in order to be finally supllied to the respective one or more LEDs.

For example the charger 8 may charge the battery 7 using a DC voltage of between 12 and 24 Volts that is provided by the renewable electrical energy source 9, e.g. by a PV system during daytime hours. The central inverter 11 may convert the DC voltage provided by the battery 7 to an AC voltage of e.g. 230 Volts. The same AC voltage may be provided by mains 10. In the drivers 1' the AC voltage of 230 Volts from both the inverter 12 and mains 10 may be converted to an DC voltage (e.g. DC bus voltage) of 400 Volts, which may be conveted to a DC voltage between 10 and 50 Volts for supplying the respective lighting means, such as at least one LED.

The above described multiple steps of conversion by the central inverter 11 and inside each driver 1' of the electrical energy provided by the reneawbale electrical energy source 9 causes electrical losses and, thus, should be avoided. In other words, these multiple conversion steps reduce the efficiency of the power supply system. This may be critical for battery applications where battery size and cost are important.

In the light of the above, it is an object of the present invention to provide a driver for lighting means that allows overcoming the above described disadvantages. In particular, it may be an object to provide a driver for lighting means that allows implementing a power supply system in an area, such as a building, using as an electrical energy source, in addition to mains, a renewable electrical energy source of the area, wherein the electrical losses may be reduced compared to a usual power supply system, as exemplarily shown in Figure 3.

These and other objects, which become apparent upon reading the following description, are solved by the subject-matter of the independent claim. The dependent claims refer to preferred embodiments of the invention.

According to a first aspect of the invention a driver for lighting means is provided. The lighting means are optionally at least one light emitting diode (LED). In this case, the driver may be referred to as "LED driver". The driver comprises a first terminal for receiving electrical energy from outside the driver, a second terminal for receiving electrical energy from outside the driver, and a third terminal for electrical connection with the lighting means. The driver comprises a switch unit. The driver comprises a first power supply path comprising a DC-to-DC converter stage, the first power supply path being electrically connected between the first terminal of the driver and a first terminal of the switch unit. The driver comprises a second power supply path comprising an AC-to-DC converter stage, the second power supply path being electrically connected between the second terminal of the driver and a second terminal of the switch unit. The driver comprises a common power supply path electrically connected between a third terminal of the switch unit and the third terminal of the driver. The switch unit is configured to be controlled to switch between a first state and a second state such that in the first state, the first terminal of the switch unit and the third terminal of the switch unit are electrically connected with each other, and in the second state, the second terminal of the switch unit and the third terminal of the switch unit are electrically connected with each other.

In other words, the first aspect proposes to provide in the driver an additional terminal for receiving electrical energy from outside the driver. As a result, the first terminal of the driver may be electrically connected directly to a battery that is charged with electrical energy from a renewable electrical energy source, such as the battery 7 of Figure 3, and the second terminal of the driver may be electrically connected with a usual AC power source, such as mains, for allowing the driver to drive one or more lighting means, such as one or more LEDs. The terms "operate" and "electrically supply" may be used a synonyms for the term "drive". As a result, the driver of the first aspect allows omitting in the power supply system of Figure 3 the conversion of a DC voltage of the battery 7 by a central inverter 11 to an AC voltage provided by mains 10 (e.g. AC voltage of 230 Volts). Namely, the driver may be directly supplied from the battery and mains, by electrically connecting the first terminal of the driver with the battery (e.g. via respective wiring, e.g. a DC wired bus) and the second terminal of the driver with mains (e.g. via respective wiring). As a result, a costly and bulky inverter in e.g. a building may be avoided and energy losses may be reduced. That is, using drivers of the first aspect in the lighting system of a building allows distributing the conversion of the DC power provided by the battery 7 of the power supply system of Figure 3 into the drivers for the lighting means of the lighting system and thereby decentralizing the conversion of the DC power from the battery 7.

Moreover, in a power supply system using a renewable electrical energy source, the switch unit of the driver allows operation of one or more lighting means operated by the driver irrespective of electrical energy conversion by the renewable electrical energy source and a state of a battery electrically supplied by the renewable electrical energy source. Namely, the switch unit may switch between the first state and the second state and, thus, may connect the common power supply path with the second power supply path in case the charging level of the battery is low (e.g. due to discharging of the batter over night in case of the renewable electrical energy source being a PV system and, thus, not providing electrical energy due to the missing sun). The second power supply path may be connected with mains via the second terminal of the driver. On the other side, electrical consumption by the driver from mains may be reduced because the switch unit of the driver may connect the common power supply path with the first power supply path in case the charging level of the battery is high (e.g. due to a great energy conversion by the renewable electrical energy source).

Since the driver according to the first aspect allows the omission of a central inverter in a power supply system comprising a renewable electrical energy source (such as omission of the central inverter 11 in the power supply system of Figure 3), the entire power supply system may be more failsafe. Namely, assuming a power supply system with multiple drivers according to the first aspect and, thus, not needing the central inverter, there is no risk that failure of the central inverter causes each driver of a lighting system, being supplied by the power supply path, to stop working. In case any of the drivers according to the first aspects fails, there may be still illumination because each of the driver is equipped with the same basic components allowing to operate the lighting means (e.g. LEDs and, thus, LED luminaires) from a battery.

In addition, the driver and its components, such as the switch unit of the driver, may be accurately scaled for the application rather than purchasing an expensive stand-alone inverter and switching solution, such as the central inverter 11 and switch unit 3 of the power supply system of Figure 3 that may be over-dimensioned for a given application.

The first terminal may comprise one or more electrical connectors, optionally two electrical connectors, for connection with electrical wiring. The second terminal may comprise one or more electrical connectors, optionally two electrical connectors, for connection with electrical wiring. The first terminal and second terminal of the driver may be referred to as "first input" and "second input" of the driver. Herein the terms "first", "second", "third" and so on are merely used for distinguishing respective elements, such as terminals of the driver.

The third terminal may comprise one or more electrical connectors, optionally two electrical connectors, for connection with electrical wiring. The one or more electrical connectors, optionally the two electrical connectors, of the third terminal may be configured to be electrically connected with the lighting means. The third terminal of the driver may be referred to as "output" of the driver.

The switch unit may comprise one or more switches. The one or more switches may be one or more transistors. The one or more transistors may be any transistor(s) known in the art (e.g. one or more bipolar junction transistors (BJTs), one or more field-effect transistors (FETs) etc.).

The DC-to-DC converter stage may comprise one or more actively switched DC-to-DC converters, such as at least one of buck converter(s), boost converter(s), flyback converter(s), resonant converter(s) etc. In addition or alternatively, the DC-to-DC converter stage may comprise one or more passive DC-to-DC converters. The DC-to-DC converter stage may be implemented by any know DC-to-DC converter circuit.

The AC-to-DC converter stage may comprise one or more actively switched AC-to-DC converters and optionally one or more DC-to-DC converters, such as at least one of buck converter(s), boost converter(s), flyback converter(s), resonant converter(s) etc. In addition or alternatively, the AC-to-DC converter stage may comprise one or more passive AC-to-DC converters and optionally one or more passive DC-to-DC converters. The AC-to-DC converter stage may be configured to perform a power factor correction (PFC). The AC-to-DC converter stage may comprise a rectifier circuit and/or filter circuit. The AC-to-DC converter stage may be implemented by any know AC-to-DC converter circuit.

The switch unit may be configured to receive control signals from a control unit for being controlled to switch between the first state and the second state. The DC-to-DC converter stage and/or the AC-to-DC converter stage may be configured to receive control signals from the control unit for being controlled. The control unit may be part of the driver, optionally of the switch unit, or may be an external control unit (e.g. a control unit of a luminaire in which the driver may be arranged to drive lighting means of the luminaire). The description herein of the optional control unit of the driver, such as the function of the control unit, is correspondingly valid for the external control unit.

The driver may comprise the control unit. The control unit may be at least one of a controller, microcontroller, processor, microprocessor, application specific integrated circuit (ASIC) and field programmable gate array (FPGA). The control unit may be configured to control the switch unit by providing control signals to the switch unit. The control unit may be configured to control the DC-to-DC converter stage and/or the AC-to-DC converter stage by providing control signals to the respective stage. The control unit may be configured to provide the control signals to the respective component of the driver, i.e. the switch unit and optionally the DC-to-DC converter stage and/or the AC-to-DC converter stage, wirelessly and/or wired (e.g. via a wired bus).

The control unit may be configured to perform the control functions described herewith with regard to the different components of the driver, such as control functions described with regard to the switch unit (e.g. controlling the switch unit dependent on a threshold).

The description herein of the optional control unit of the driver, such as the function of the control unit, is correspondingly valid for an external control unit. For example, the description herein of the optional control unit of the driver is correspondingly valid for an external control unit for controlling the switch unit and optionally the DC-to-DC converter stage and/or the AC-to-DC converter stage.

Since in the first state the first terminal of the switch unit and the third terminal of the switch unit are connected with each other, the common supply path is electrically supplied by the first supply path in the first state. Since in the second state the second terminal of the switch unit and the third terminal of the switch unit are connected with each other, the common supply path is electrically supplied by the second supply path in the second state.

The switch unit may be configured to automatically switch between the first and second state.

Optionally, the driver comprises a fourth terminal for electrical connection with a rechargeable battery. The first power supply path may comprise the DC-to-DC converter stage and a charger. The charger may be electrically connected between the first terminal of the driver and the fourth terminal of the driver. The DC-to-DC converter stage may be electrically connected between the fourth terminal of the driver and the first terminal of the switch unit.

The fourth terminal may comprise one or more electrical connectors, optionally two electrical connectors, for connection with electrical wiring. The one or more electrical connectors, optionally the two electrical connectors, of the fourth terminal may be configured to be electrically connected with the rechargeable battery.

Thus, the driver has the advantage that charging of the battery may be decentralized. That is, in the power supply system of Figure 3 the charger 8 may be omitted when using for the drivers 1' the driver of the first aspect. Namely, in this case the fourth terminal of each driver of the first aspect may be connected with the battery. Omitting the single charger in the power supply system prevents the case that a failure of the single charger prevents recharging of the battery of the power supply system and, thus, usage of the DC power provided by the renewable electrical energy source. As outlined already above, failure of a single driver according to the first aspect among multiple such drivers will not lead to a stop of recharging of the battery, since the other drivers according to the first aspect may still provide the function for charging the battery.

Moreover, the driver allows using multiple batteries, e.g. a separate rechargeable battery for each driver, instead of a single battery, such as the single battery 7 of the power supply system of Figure 3. This again makes a power supply system comprising multiple of the driver according to the first aspect more stable against failure of single components of the system. Namely, there may be no failure of a single battery, such as the single battery 7 of the system of Figure 3, which can prevent DC power being provided by the renewable electrical energy source of the system for supplying lighting means.

The charger may be configured to be controlled by control signals. The charger may be configured to receive control signals from a control unit, e.g. the optionally control unit of the driver or the external control unit (e.g. the control unit of a luminaire in which the driver may be arranged to drive lighting means of the luminaire).

The charger may charge the battery using electrical energy provided at the first terminal of the driver, when the battery is connected with the fourth terminal of the driver. The DC-to-DC converter stage may convert a DC voltage provided by the battery and provide the converted DC voltage to the first terminal of the switch unit, when the battery is connected with the fourth terminal of the driver.

The optional control unit of the driver may be configured to provide the control signals to the charger wirelessly and/or wired (e.g. via a wired bus).

The driver, optionally the switch unit, may be configured to determine a voltage receivable at the fourth terminal of the driver. The switch unit may be configured to switch to or be in the first state when the voltage is greater than a voltage threshold, and switch to or be in the second state otherwise.

The driver, optionally the switch unit, may be configured to determine the voltage receivable at the fourth terminal of the driver by at least one of receiving information on the voltage from outside (wirelessly and/or wired e.g. via a wired bus), estimating the voltage, and measuring the voltage. The optional control unit of the driver may be configured to determine the voltage receivable at the fourth terminal of the driver. For this the control unit may be configured to receive information on the voltage from outside (wirelessly and/or wired e.g. via a wired bus), estimate the voltage, and/or measure the voltage.

The voltage threshold may be set such that a voltage equaling the voltage threshold is sufficient for electrically supplying the lighting means.

A switching by the switch unit between the first state and second state or vice versa, as described herein, may be performed automatically. In other words, as soon as the driver, optionally the switch unit or the optional control unit of the driver, determine a condition for switching the switch unit to one of the first state and the second state the driver, optionally the switch unit or the optional control unit, may control such a switching of the switch unit. That is, there is no need of a command being received by the driver from outside the driver (e.g. from a user) for causing the switch unit to switch to the respective state.

The driver, optionally the switch unit, may be configured to determine an electrical energy input and output of the driver via the fourth terminal. The switch unit may be configured to switch to or be in the first state as long as a difference between the electrical energy output and electrical energy input via the fourth terminal is greater than an electrical energy threshold.

The driver, optionally the switch unit, may be configured to determine the electrical energy input and output of the driver via the fourth terminal by at least one of receiving information on the electrical energy input and/or electrical energy output from outside (wirelessly and/or wired e.g. via a wired bus), estimating the electrical energy input and/or electrical energy output, and measuring the electrical energy input and/or electrical energy output. The optional control unit of the driver may be configured to determine the electrical energy input and output of the driver via the fourth terminal. For this the control unit may be configured to receive information on the electrical energy input and/or electrical energy output from outside (wirelessly and/or wired e.g. via a wired bus), to estimate the electrical energy input and/or electrical energy output, and/or to measure the electrical energy input and/or electrical energy output

The electrical energy threshold may be set such that an electrical energy equaling the electrical energy threshold is sufficient for electrically supplying the lighting means. The electrical energy threshold may be set such that an electrical energy equaling the electrical energy threshold is sufficient for electrically supplying an emergency lighting.

Thus, the driver allows an emergency lighting using a power supply system with a renewable electrical energy source.

The driver, optionally the switch unit, may be configured to determine whether the rechargeable battery is in good shape, when the battery is connected with the fourth terminal of the driver. The switch unit may be configured to switch to or be in the first state when the battery is in good shape, and switch to or be in the second state otherwise.

The driver, optionally the switch unit, may be configured to determine the shape of the battery by at least one of receiving information on the shape of the battery from outside (wirelessly and/or wired e.g. via a wired bus), estimating the shape of the battery, and measuring the the shape of the battery. The optional control unit of the driver may be configured to determine the shape of the battery. For this the control unit may be configured to receive information on the shape of the battery from outside (wirelessly and/or wired e.g. via a wired bus), estimate the shape of the battery, and/or measure the shape of the battery.

Optionally, the first power supply path comprises the DC-to-DC converter stage, a battery and a charger for charging the battery. The charger may be electrically connected between the first terminal of the driver and the battery. The DC-to-DC converter stage may be electrically connected between the battery and the first terminal of the switch unit.

This has the advantage that charging of the battery is decentralized. That is, in the power supply system of Figure 3 the single charger 8 and the single battery 7 may be omitted when using for the drivers 1' the driver of the first aspect. Namely, in this case each driver of the first aspect comprises its own battery, which may be charged by a charge of the driver using DC power from a renewable electrical energy source, when the first terminal is connected with the renewable electrical energy source. Omitting the charger 8 and the battery 7 in the power supply system of Figure 3 prevents the case that a failure of the charger 8 and/or the battery 7 prevents usage of the DC power provided by the renewable electrical energy source 9. As outlined already above, failure of a single driver according to the first aspect among multiple such drivers will not lead to a stop of usage of DC power from the renewable electrical energy source, since the other drivers according to the first aspect may still operate using DC power from the renewable electrical energy source.

Since the charger may charge the battery, the battery is a rechargeable battery.

The charger may be configured to be controlled by control signals. The charger may be configured to receive control signals from a control unit, e.g. the optionally control unit of the driver or the external control unit (e.g. the control unit of a luminaire in which the driver may be arranged to drive lighting means of the luminaire).

The optional control unit of the driver may be configured to provide the control signals to the charger wirelessly and/or wired (e.g. via a wired bus).

The driver, optionally the switch unit, may be configured to determine a charging level of the battery. The switch unit may be configured to switch to or be in the first state when the charging level is greater than a charging level threshold, and switch to or be in the second state otherwise.

The driver, optionally the switch unit, may be configured to determine the charging level of the battery by at least one of receiving information on the charging level from outside (wirelessly and/or wired e.g. via a wired bus), estimating the charging level, and measuring the charging level. The optional control unit of the driver may be configured to determine the charging level of the battery. For this the control unit may be configured to receive information on the charging level from outside (wirelessly and/or wired e.g. via a wired bus), estimate the charging level, and/or measure the charging level.

The above is correspondingly valid with regard to the battery that may be connected with the optional fourth terminal of driver.

Optionally, the charging level threshold is set such that a charging level of the battery equaling the charging level threshold allows the battery to provide electrical energy for an emergency lighting.

Thus, the driver allows an emergency lighting using a power supply system with a renewable electrical energy source.

The charging level threshold may be set such that a charging level of the battery equaling the charging level threshold allows the battery to provide electrical energy for the lighting means. The charging level threshold may be set such that a charging level of the battery equaling the charging level threshold prevents the battery to be damaged and/or prolongs a lifetime of the battery.

The driver, optionally the switch unit or the optional control unit of the driver, may be configured to determine whether the battery of the driver is in good shape. The switch unit may be configured to switch to or be in the first state when the battery is in good shape, and switch to or be in the second state otherwise.

The driver, optionally the switch unit or the optional control unit of the driver, may be configured to determine the shape of the battery by at least one of receiving information on the shape of the battery from outside (wirelessly and/or wired e.g. via a wired bus), estimating the shape of the battery, and measuring the shape of the battery.

Optionally, the first power supply path is the DC-to-DC converter stage. The driver, optionally the switch unit or the optional control unit of the driver, may be configured to determine a voltage receivable at the first terminal of the driver. The switch unit may be configured to switch to or be in the first state when the voltage is greater than a voltage threshold, and switch to or be in the second state otherwise.

The voltage threshold may be set such that a voltage equaling the voltage threshold is sufficient for electrically supplying the lighting means.

The description with regard to switching the switch unit in case the driver comprises the optional fourth terminal and with regard to switching the switch unit in case the driver comprises the battery is correspondingly valid for switching the switch unit in case a battery is connected with the first terminal of the driver.

The driver, optionally the switch unit or the optional control unit of the driver, may be configured to determine whether a battery (e.g. rechargeable battery) is in good shape, when the battery is connected with the first terminal of the driver, the fourth terminal of the driver or part of the first power supply path of the driver. The switch unit may be configured to switch to or be in the first state when the battery is in good shape, and switch to or be in the second state otherwise.

The driver, optionally the switch unit or the optional control unit of the driver, may be configured to determine the shape of the battery by at least one of receiving information on the shape of the battery from outside (wirelessly and/or wired e.g. via a wired bus), estimating the shape of the battery, and measuring the shape of the battery.

The driver, optionally the switch unit or the optional control unit of the driver, may be configured to determine a voltage receivable at the second terminal of the driver. The switch unit may be configured to switch to or be in the first state when the voltage receivable at the second terminal of the driver is smaller than a voltage threshold for the voltage receivable at the second terminal of the driver.

The voltage threshold for the voltage receivable at the second terminal of the driver may be set such that a voltage equaling the voltage threshold for the voltage receivable at the second terminal of the driver is sufficient for electrically supplying the lighting means.

Optionally, the common power supply path comprises a current source.

The current source may be a controllable current source configured to be controlled by control signals. The current source may be configured to receive control signals from a control unit, e.g. the optionally control unit of the driver or the external control unit (e.g. the control unit of a luminaire in which the driver may be arranged to drive lighting means of the luminaire).

The optional control unit of the driver may be configured to provide the control signals to the current source wirelessly and/or wired (e.g. via a wired bus).

In order to achieve the driver according to the first aspect of the present invention, some or all of the above described optional features may be combined with each other.

According to a second aspect of the invention, a power supply system for lighting means is provided. The lighting means are optionally at least one light emitting diode (LED). The power supply system comprises a driver according to the first aspect, as described above, for the lighting means. The power supply system comprises a DC power supply circuit for electrically supplying a DC power, and an AC power supply circuit for electrically supplying an AC power. The first terminal of the driver is configured to be electrically connected with the DC power supply circuit. The second terminal of the driver is configured to be electrically connected with the AC power supply circuit.

The above description with regard to the driver according to the first aspect of the present invention is also valid for the power supply system according to the second aspect of the present invention.

The power supply system may comprise a control unit, which may be arranged outside the driver. The description of a control unit (e.g. the optional control unit of the driver according to the first aspect) for controlling components of the driver according to the first aspect is valid for the optional control unit of the power supply system.

The power supply system may comprise multiple of the driver according of the first aspect, i.e. two or more drivers according to the first aspect.

The description of the power supply system of the second aspect is valid for describing the driver of the first aspect.

The power supply system according to the second aspect achieves the same advantages as the driver according to the first aspect.

In order to achieve the power supply system according to the second aspect of the present invention, some or all of the above described optional features may be combined with each other.

According to a third aspect of the invention, a luminaire is provided. The luminaire comprises a driver according to the first aspect, as described above, and lighting mean. The lighting means are optionally at least one light emitting diode (LED). The lighting means are electrically connected with the third terminal of the driver.

The luminaire may comprise a control unit, which may be arranged outside the driver. The description of a control unit (e.g. the optional control unit of the driver according to the first aspect) for controlling components of the driver according to the first aspect is valid for the optional control unit of the luminaire.

The above description with regard to the driver according to the first aspect of the present invention is also valid for the luminaire according to the third aspect of the present invention.

The description of the luminaire of the third aspect is valid for describing the driver of the first aspect.

The luminaire according to the third aspect achieves the same advantages as the driver according to the first aspect.

Optionally, the luminaire comprises a rechargeable battery; and the rechargeable battery is electrically connected with the fourth terminal of the driver.

The luminaire, optionally a control unit of the luminaire, may be configured to determine a charging level of the battery, and control the switch unit of the driver to switch to or be in the first state when the charging level is greater than a charging level threshold, and switch to or be in the second state otherwise.

The charging level threshold may be set such that a charging level of the battery equaling the charging level threshold allows the battery to provide electrical energy for an emergency lighting. In this case, the luminaire may be used for emergency lighting. That is, the luminaire may be an emergency luminaire. The charging level threshold may be set such that a charging level of the battery equaling the charging level threshold allows the battery to provide electrical energy for the lighting means. The charging level threshold may be set such that a charging level of the battery equaling the charging level threshold prevents the battery to be damaged and/or prolongs a lifetime of the battery.

The description of a control unit (e.g. the optional control unit of the driver according to the first aspect) for controlling components of the driver according to the first aspect is valid for the optional control unit of the luminaire.

In order to achieve the luminaire according to the third aspect of the present invention, some or all of the above described optional features may be combined with each other.

According to a fourth aspect of the invention, a method for operating a driver according to the first aspect, as described above, is provided. The method comprises electrically connecting the first terminal of the driver with a DC power supply circuit comprising a renewable electrical energy source, and electrically connecting the second terminal of the driver with an AC power supply circuit.

The above description with regard to the driver according to the first aspect of the present invention is also valid for the method according to the fourth aspect of the present invention.

The method according to the fourth aspect achieves the same advantages as the driver according to the first aspect.

All steps which are performed by the various entities described in the present application as well as the functionalities described to be performed by the various entities are intended to mean that the respective entity is adapted to or configured to perform the respective steps and functionalities.

In the following, the invention is described exemplarily with reference to the enclosed Figures, in which
- **Figures 1 and 2**: each schematically show an example of a driver and a power supply system of the present invention, and
- **Figure 3**: shows an example of a usual power supply system comprising a renewable electrical energy source.

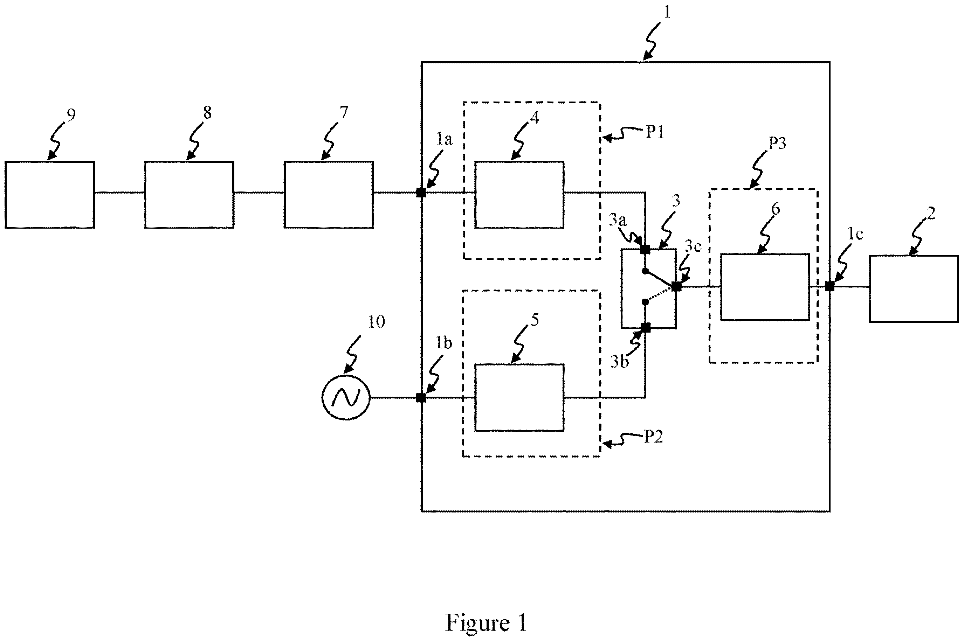

**Figure 1** schematically shows an example of a driver and a power supply system of the present invention. The driver of Figure 1 is an example of the driver according to the first aspect and the power supply system is an example of the power supply system according to the second aspect. The description of the driver according to the first aspect is correspondingly valid for the driver of Figure 1. The description of the power supply system according to the second aspect is correspondingly valid for the power supply system of Figure 1.

The driver 1 of Figure 1 is a driver for lighting means 2. The lighting means are optionally at least one light emitting diode (LED). The driver 1 comprises a first terminal 1a for receiving electrical energy from outside the driver 1, a second terminal 1b for receiving electrical energy from outside the driver 1, a third terminal 1c for electrical connection with the lighting means 2, and a switch unit 3. The driver 1 comprises a first power supply path P1 comprising a DC-to-DC converter stage 4, the first power supply path P1 being electrically connected between the first terminal 1a of the driver 1 and a first terminal 3a of the switch unit 3. The driver 1 comprises a second power supply path P2 comprising an AC-to-DC converter stage 5, the second power supply path P2 being electrically connected between the second terminal 1b of the driver 1 and a second terminal 3b of the switch unit 3. The driver 1 comprises a common power supply path P3 electrically connected between a third terminal 3c of the switch unit 3 and the third terminal 1c of the driver 1. The switch unit 3 is configured to be controlled to switch between a first state and a second state such that in the first state, the first terminal 3a of the switch unit 3 and the third terminal 3c of the switch unit 3 are electrically connected with each other, and in the second state, the second terminal 3b of the switch unit 3 and the third terminal 3c of the switch unit 3 are electrically connected with each other. In Figure 1, the first state of the switch unit 3 is exemplarily shown, i.e. the first terminal 3a of the switch unit 3 and the third terminal 3c of the switch unit 3 are electrically connected with each other. The second state of the switch unit 3 is indicated in Figure 1 by a dashed line.

Optionally, the common power supply path P3 comprises a current source 6.

The driver 1 may comprise a control unit (not shown in Figure 1). The control unit may be at least one of a controller, microcontroller, processor, microprocessor, application specific integrated circuit (ASIC) and field programmable gate array (FPGA). The control unit may be configured to control the switch unit 3 by providing control signals to the switch unit 3. The control signal may be configured to control the DC-to-DC converter stage 4, the AC-to-DC converter stage 5, and/or the current source 6 by providing control signals to the respective component. The control unit may be configured to provide the control signals to the respective component of the driver 1, i.e. the switch unit 3 and optionally the DC-to-DC converter stage 4, the AC-to-DC converter stage 5 and/or the current source 6, wirelessly and/or wired (e.g. via a wired bus).

The control unit of the driver 1 may be configured to perform the control functions described herein with regard to the different components of the drive 1, such as control functions described with regard to the switch unit 3 (e.g. controlling the switch unit 3 dependent on a threshold).

The driver 1, optionally the switch unit 3 or the optional control unit, may be configured to determine a voltage receivable at the first terminal 1a of the driver 1. The switch unit 3 may be configured to switch to or be in the first state when the voltage is greater than a voltage threshold, and switch to or be in the second state otherwise. This may be controlled by the control unit.

The driver 1, optionally the switch unit 3 or the optional control unit, may be configured to determine a voltage receivable at the second terminal 1b of the driver 1. The switch unit may be configured to switch to or be in the first state when the voltage receivable at the second terminal 1b of the driver 1 is smaller than a voltage threshold for the voltage receivable at the second terminal 1b of the driver 1. This may be controlled by the control unit.

The driver 1, optionally the switch unit or the optional control unit of the driver 1, may be configured to determine a charging level of the battery 7, and the switch unit 3 is configured to switch to or be in the first state when the charging level is greater than a charging level threshold, and switch to or be in the second state otherwise. This may be controlled by the control unit.

As shown in Figure 1, the driver 1 of Figure 1 may be part of a power supply system for the lighting means 2. The power supply system of Figure 1 comprises the driver 1, a DC power supply circuit for electrically supplying a DC power, and an AC power supply circuit for electrically supplying an AC power. The DC power supply circuit comprise a renewable electrical energy source 9, a charger 8 and a battery 7 (rechargeable battery). The first terminal 1a of the driver 1 is configured to be electrically connected with the DC power supply circuit by being connected with the battery 7. For this a wiring, e.g. a DC wired bus, may be provided. The AC power supply circuit may be mains 10. The second terminal 1b of the driver 1 is configured to be electrically connected with mains 10.

In case the power supply system comprise multiple drivers of the driver type shown in Figure 1, i.e. two or more of the driver 1 of Figure 1, the first terminal 1a of each driver 1 may be connected with the battery 7. For this a separate wiring (e.g. a DC wired bus) may be provided that is separate to the wiring for connecting the second terminal 1b of each driver 1 with mains 10. The second terminal 1b of each driver 1 may be connected with mains 10.

The driver 1 and the lighting means 2 may be part of a luminaire. The description of the luminaire of the third aspect is correspondingly valid for the aforementioned luminaire. The above described optional control unit of the driver 1 may be a control unit of the luminaire, which may be arranged outside the driver 1 (i.e. in this case it is not a control unit of the driver 1).

Compared to the power supply system of Figure 3, the driver 1 of Figure 1 allows optimizing power conversion for a given lighting means load (e.g. LED load) rather than employing a universal step to an AC voltage of e.g. 230 Volts in the system of Figure 3 followed by a rectification and level shifting down to the lighting means load. This allows optimizing efficiency which is an advantage for a solution based off battery. The power supply system of Figure 1 allows miniaturization and cost optimizing and is additionally scalable from small to large installation without having to use over dimensioned inverters, such as the central inverter 11 of the power supply system of Figure 3. This may be particularly useful for providing a power supply system for lighting means in small building and offices. The power supply system of Figure 1 is distributed, i.e. the single switch unit 3 of the system of Figure 3 is now distributed as a switch unit 3 in each driver 1 of the system of Figure 1. That is, a central inverter and central switch unit, which have the disadvantage that an individual failure may result in loss of power for the whole lighting system powered by the power supply system, are not used. In contrast thereto, a failure of a driver 1 of multiple drivers 1 of Figure 1 does not affect the other drivers 1. The battery power may be routed as a DC wired bus to each first terminal of each driver 1 of the power supply system and voltage supply may be optimized to minimize losses while providing a safe low voltage infrastructure between the battery 7 and each driver 1 of Figure 1. There may be synergy with existing emergency lighting platforms or systems with respect to DC/DC conversion from a battery source, as well as a switchover from an AC to DC supply and supply health detection (e.g. detection of whether supply from mains works, is disrupted or fails).

For further information on the driver 1, the power supply path and the luminaire of Figure 1 reference is made to the driver of the first aspect, the power supply system of the second aspect and the luminaire of the third aspect.

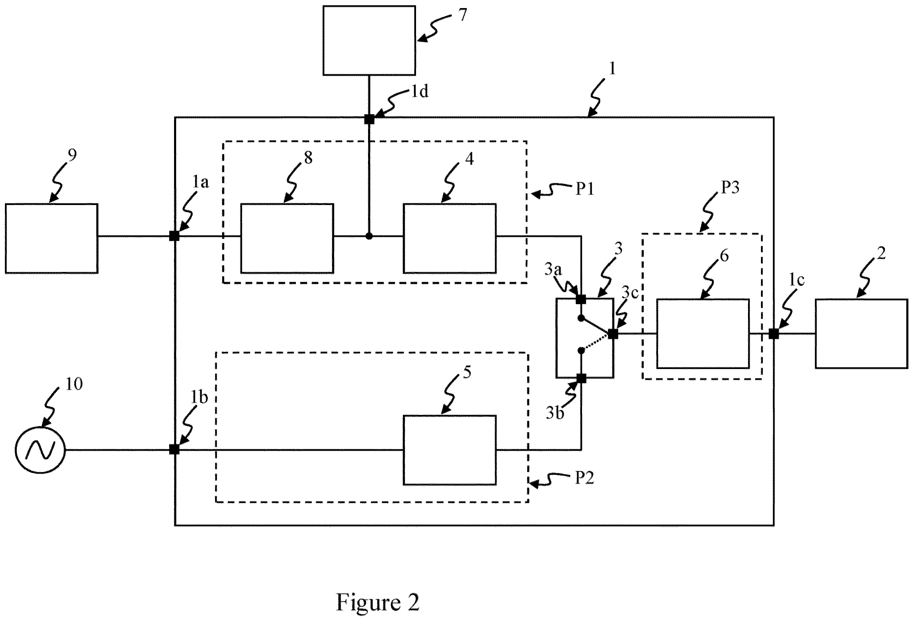

**Figure 2** schematically shows an example of a driver and a power supply system of the present invention. The driver of Figure 2 corresponds to the driver of Figure 1 with the difference that the driver of Figure 2 comprises a charger. Thus, the description of the driver of Figure 1 is correspondingly valid for the driver of Figure 2 and in the following mainly the differences between the driver of Figure 1 and the driver of Figure 2 are described. The power supply system of Figure 2 corresponds to the power supply system of Figure 1 with the difference that the power supply system of Figure 2 may not comprise a charger. Thus, the description of the power supply system of Figure 1 is correspondingly valid for the power supply system of Figure 2 and in the following mainly the differences between the power supply system of Figure 1 and the power supply system of Figure 2 are described.

The driver 1 of Figure 2 comprises a fourth terminal 1d for electrical connection with a rechargeable battery 7. The first power supply path P1 of the driver 1 comprise the DC-to-DC converter stage 4 and a charger 8. The charger 8 is electrically connected between the first terminal 1a of the driver 1 and the fourth terminal 1d of the driver 1. The DC-to-DC converter stage 4 is electrically connected between the fourth terminal 1d of the driver 1 and the first terminal 3a of the switch unit 3. Thus, when the fourth terminal 1d is connected with the battery 7, the charger 8 may charge the battery using electrical energy received at the first terminal 1a, and the DC-to-DC converter stage 4 may convert a voltage provided by the battery 7 and output the converted voltage to the first terminal 3a of the switch unit 3.

The driver 1, optionally the switch unit 3 or the optional control unit of the driver 1, may be configured to determine a voltage receivable at the fourth terminal 1d of the driver 1. The switch unit 3 may be configured to switch to or be in the first state when the voltage is greater than a voltage threshold, and switch to or be in the second state otherwise.

The driver 1, optionally the switch unit 3 or the optional control unit of the driver 1, may be configured to determine an electrical energy input and output of the driver via the fourth terminal 1d. The switch unit 3 may configured to switch to or be in the first state as long as a difference between the electrical energy output and electrical energy input via the fourth terminal 1d is greater than an electrical energy threshold. This may be controlled by the control unit.

The electrical energy threshold may be set such that an electrical energy equaling the electrical energy threshold is sufficient for electrically supplying the lighting means 2. The electrical energy threshold may be set such that an electrical energy equaling the electrical energy threshold is sufficient for electrically supplying an emergency lighting.

The driver 1, optionally the switch unit or the optional control unit of the driver 1, may be configured to determine a charging level of the battery 7, and the switch unit 3 is configured to switch to or be in the first state when the charging level is greater than a charging level threshold, and switch to or be in the second state otherwise. This may be controlled by the control unit.

The charging level threshold is optionally set such that a charging level of the battery 7 equaling the charging level threshold allows the battery 7 to provide electrical energy for an emergency lighting.

Since a battery 7 may be connected with the fourth terminal 1d of the driver 1, the DC power supply circuit does not need to comprise a battery 7 and charger 8, as shown in Figure 2. Thus, the first terminal 1a of the driver 1 is configured to be electrically connected with the renewable electrical energy source 9. The battery 7 may be for example implemented using lithium technology. That is, it may be a lithium battery. This allows minimizing the battery volume and weight. The battery 7 may be part of the luminaire comprising the driver 1 and the lighting means 2.

In case the power supply system comprises multiple drivers of the driver type shown in Figure 2, i.e. two or more of the driver 1 of Figure 2, the fourth terminal 1d of each driver 1 may be connected with a respective battery 7. That is, for each driver 1 a separate battery may be provided. The first terminal 1a of each driver 1 may be connected with the renewable electrical energy source 9. For this a separate wiring (e.g. a DC wired bus) may be provided that is separate to the wiring for connecting the second terminal 1b of each driver 1 with mains 10.

The driver 1 of Figure 2 offers further integration opportunities and facilitates a more local battery that may be mounted near or inside a luminaire comprising the driver 1.

Optionally, the battery 7 may be part of the driver 1 of Figure 2 (not shown in Figure 2). In this case, the driver 1 does not need the fourth terminal 1d. The first power supply path P1 may comprise the DC-to-DC converter stage 4, the battery 7 and the charger 8 for charging the battery 7. The charger 8 is electrically connected between the first terminal 1a of the driver 1 and the battery 7. The DC-to-DC converter stage 4 is electrically connected between the battery 7 and the first terminal 3a of the switch unit 3 (not shown in Figure 2). As outlined above by holding a certain percentage of the electrical energy stored in the battery 7 in reserve it may be used for emergency lighting (e.g. in case the AC supply from mains 10 fails). Thus, emergency lighting may be powered from the remaining battery's 7 energy.

In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

## Claims

1. A driver (1) for lighting means (2), optionally at least one light emitting diode, LED, the driver (1) comprising
- a first terminal (1a) for receiving electrical energy from outside the driver (1),
- a second terminal (1b) for receiving electrical energy from outside the driver (1),
- a third terminal (1c) for electrical connection with the lighting means (2),
- a switch unit (3),
- a first power supply path (P1) comprising a DC-to-DC converter stage (4), the first power supply path (P1) being electrically connected between the first terminal (1a) of the driver (1) and a first terminal (3a) of the switch unit (3),
- a second power supply path (P2) comprising an AC-to-DC converter stage (5), the second power supply path (P2) being electrically connected between the second terminal (1b) of the driver (1) and a second terminal (3b) of the switch unit (3), and
- a common power supply path (P3) electrically connected between a third terminal (3c) of the switch unit (3) and the third terminal (1c) of the driver (1); wherein
- the switch unit (3) is configured to be controlled to switch between a first state and a second state such that
- in the first state, the first terminal (3a) of the switch unit (3) and the third terminal (3c) of the switch unit (3) are electrically connected with each other, and
- in the second state, the second terminal (3b) of the switch unit (3) and the third terminal (3c) of the switch unit (3) are electrically connected with each other.

2. The driver (1) according to claim 1, wherein
- the driver (1) comprises a fourth terminal (1d) for electrical connection with a rechargeable battery (7);
- the first power supply path (P1) comprises the DC-to-DC converter stage (4) and a charger (8);
- the charger (8) is electrically connected between the first terminal (1a) of the driver (1) and the fourth terminal (1d) of the driver (1); and
- the DC-to-DC converter stage (4) is electrically connected between the fourth terminal (1d) of the driver (1) and the first terminal (3a) of the switch unit (3).

3. The driver (1) according to claim 2, wherein
- the driver (1), optionally the switch unit (3), is configured to determine a voltage receivable at the fourth terminal (1d) of the driver (1), and
- the switch unit (3) is configured to
- switch to or be in the first state when the voltage is greater than a voltage threshold, and
- switch to or be in the second state otherwise.

4. The driver (1) according to claim 2 or 3, wherein
- the driver (1), optionally the switch unit (3), is configured to determine an electrical energy input and output of the driver (1) via the fourth terminal (1d),
- the switch unit (3) is configured to switch to or be in the first state as long as a difference between the electrical energy output and electrical energy input via the fourth terminal is greater than an electrical energy threshold.

5. The driver (1) according to claim 1, wherein
- the first power supply path (P1) comprises the DC-to-DC converter stage (4), a battery (7) and a charger (8) for charging the battery (7);
- the charger (8) is electrically connected between the first terminal (1a) of the driver (1) and the battery (7); and
- the DC-to-DC converter stage (4) is electrically connected between the battery (7) and the first terminal (3a) of the switch unit (3).

6. The driver (1) according to any one of claims 2 to 5, wherein
- the driver (1), optionally the switch unit (3), is configured to determine a charging level of the battery (7), and
- the switch unit (3) is configured to
- switch to or be in the first state when the charging level is greater than a charging level threshold, and
- switch to or be in the second state otherwise.

7. The driver (1) according to claim 6, wherein
- the charging level threshold is set such that a charging level of the battery (7) equaling the charging level threshold allows the battery (7) to provide electrical energy for an emergency lighting.

8. The driver (1) according to claim 1, wherein
- the first power supply path (P1) is the DC-to-DC converter stage (4),
- the driver (1), optionally the switch unit (3), is configured to determine a voltage receivable at the first terminal (1a) of the driver (1), and
- the switch unit (3) is configured to
- switch to or be in the first state when the voltage is greater than a voltage threshold, and
- switch to or be in the second state otherwise.

9. The driver (1) according to any one of the previous claims, wherein
- the driver (1), optionally the switch unit (3), is configured to determine a voltage receivable at the second terminal (1b) of the driver (1), and
- the switch unit (3) is configured to switch to or be in the first state when the voltage receivable at the second terminal (1b) of the driver (1) is smaller than a voltage threshold for the voltage receivable at the second terminal (1b) of the driver (1).

10. The driver (1) according to any one of the previous claims, wherein
- the common power supply path (P3) comprises a current source (6).

11. A power supply system for lighting means (2), optionally at least one light emitting diode, LED, the power supply system comprising
- a driver (1) according to any one of the previous claims for the lighting means (2),
- a DC power supply circuit (7, 8, 9; 9) for electrically supplying a DC power, and
- an AC power supply circuit (10) for electrically supplying an AC power; wherein
- the first terminal (1a) of the driver (1) is configured to be electrically connected with the DC power supply circuit (7, 8, 9; 9), and
- the second terminal (1b) of the driver (1) is configured to be electrically connected with the AC power supply circuit (10).

12. A luminaire comprising a driver (1) according to any one of claims 1 to 10 and lighting means (2), optionally at least one light emitting diode, LED, wherein
- the lighting means (2) are electrically connected with the third terminal (1c) of the driver (1).

13. The luminaire according to claim 12, wherein
- the driver (1) is a driver (1) according to any one of claims 2 to 4, and 6, 7, 9 and 10 when depending on any one of claims 2 to 4;
- the luminaire comprises a rechargeable battery (7); and
- the rechargeable battery (7) is electrically connected with the fourth terminal (1d) of the driver (1).

14. The luminaire according to claim 13, wherein
- the luminaire, optionally a control unit of the luminaire, is configured to
- determine a charging level of the battery (7), and
- control the switch unit (3) of the driver (1) to
- switch to or be in the first state when the charging level is greater than a charging level threshold, and
- switch to or be in the second state otherwise.

15. A method for operating a driver (1) according to any one of claims 1 to 10, wherein the method comprises
- electrically connecting the first terminal (1a) of the driver (1) with a DC power supply circuit comprising a renewable electrical energy source (9), and
- electrically connecting the second terminal (1b) of the driver (1) with an AC power supply circuit (10).
